# EUROPÄISCHE PATENTANMELDUNG

(11) **EP 4 648 360 A1**
(43) Veröffentlichungstag der Anmeldung: **12.11.2025**
(21) Anmeldenummer: 24174638.7
(22) Anmeldetag: 07.05.2024
(51) Int. Cl.: H04L 12/28, H04M 11/02, H04N 7/18

(54) **VERFAHREN ZUR KONFIGURATION EINES TÜRKOMMUNIKATIONSSYSTEMS UND TÜRKOMMUNIKATIONSSYSTEM**

(71) Anmelder: GIRA GIERSIEPEN GmbH & Co. KG, 42477 Radevormwald (DE)
(72) Erfinder: Liseanu, Gabriel, 51381 Leverkusen (DE); Böhm, Dennis, 28219 Bremen (DE); Brunßen, Jochen, 26203 Wardenburg (DE)
(74) Vertreter: Angerhausen, Christoph

(57) **Zusammenfassung**

Die Erfindung betrifft ein Verfahren zur Konfiguration eines Türkommunikationssystems (10) gemäß einer Projektierung des Türkommunikationssystems (10), wobei das Türkommunikationssystem (10) eine Mehrzahl Netzwerkknoten (20) umfasst, wobei das Verfahren umfasst: Auswählen eines Inbetriebnahmeknotens (31), wobei ein erster Knoten (32) der Mehrzahl Netzwerkknoten (20) als Inbetriebnahmeknoten (319 ausgewählt wird; Übermitteln der Projektierung an den Inbetriebnahmeknoten (31), wobei bevorzugt die Projektierung von einem externen Gerät (50) übermittelt wird; Übermitteln der Projektierung und/oder Konfigurationsparameter der Projektierung ausgehend von dem Inbetriebnahmeknoten (31) an die übrigen Knoten (30) der Mehrzahl Netzwerkknoten (20), und Konfigurieren der Knoten (30) der Mehrzahl Netzwerkknoten (20) mit einer der Projektierung entsprechenden Konfiguration. Die Erfindung betrifft weiterhin ein Türkommunikationssystem (10).

## Beschreibung

Die Erfindung betrifft ein Verfahren zur Konfiguration eines Türkommunikationssystems und ein Türkommunikationssystem.

Türkommunikationssysteme dienen beispielsweise dazu, ein Klingeln an einer Tür zu kommunizieren, um z.B. das Warten einer Person vor einer Tür zu signalisieren. Üblicherweise kann über ein Türkommunikationssystem ein Öffnen einer Tür initiiert werden, und/oder eine Tür geöffnet werden, z.B. durch Öffnen eines Türschlosses. Türkommunikationssysteme können auch eine Erkennung und/oder Identifikation von vor der Tür befindliche Personen oder Gegenstände ermöglichen, und/oder eine Kommunikation mit vor der Tür befindlichen Personen ermöglichen.

Türkommunikationssysteme sind beispielsweise in fast jedem Gebäude, Wohnung Wohneinheit oder Gewerbeeinheit verbaut.

Häufig besteht der Wunsch, dass ein Türkommunikationssystem eine Vielzahl von Innenstationen und/oder entsprechenden Außenstationen aufweisen soll, wodurch das Türkommunikationssystem eine Hohe Anzahl an Knoten bzw. Kommunikationsteilnehmer aufweisen kann.

Üblicherweise benötigen bekannte Türkommunikationssysteme dabei einen zentralen Server, der als Registrar dienen kann. Bei diesen bekannten Systemen müssen die Kommunikationsteilnehmer bzw. Knoten des Türkommunikationssystems bei dem oder auf dem zentralen Server ihre Kontaktdaten hinterlegen, um erreichbar zu sein oder werden. Ein solches Türkommunikationssystem ist beispielsweise aus der US 10,075,334 B1 bekannt.

Derartige Systeme sind anfällig für einen Ausfall des zentralen Servers, oder erfordern weitere Server als backup.

Es ist deshalb Aufgabe der vorliegenden Erfindung, ein Verfahren zur Konfigurierung eines Türkommunikationssystem und ein Türkommunikationssystem bereitzustellen, das diese Nachteile überwindet.

Diese Aufgabe wird durch ein Verfahren zur Konfigurierung eines Türkommunikationssystems nach Anspruch 1 und ein entsprechendes Türkommunikationssystem nach Anspruch 12 gelöst. Die jeweils abhängigen Ansprüche betreffen vorteilhafte Ausführungsformen.

Insbesondere benötigt das erfindungsgemäße Türkommunikationssystem keine zentrale Komponente bzw. keinen zentralen Server, sondern kann als dezentrales System gesehen werden. Die Kommunikationsteilnehmer bzw. Knoten des Türkommunikationssystems kennen sich nach der Projektierung untereinander und können somit direkt miteinander kommunizieren. Bei Ausfallen einzelner Knoten kann damit eine Beeinträchtigung der Funktionalität als Ganzes verhindert oder zumindest stark reduziert sein oder werden. Die verbleibenden Knoten können ihre Aufgaben vollständig erfüllen.

Die Erfindung ermöglicht zudem, dass die Projektierung an einen einzigen Knoten übermittelt werden kann, und die Projektierung und/oder Konfigurationsdaten innerhalb des Systems und/oder Netzwerks zwischen den Knoten propagieren und/oder übermittelt werden. Damit muss nicht jeder Knoten separat von dem externen Gerät und/oder einem Benutzer eingerichtet und/oder konfiguriert werden. Eine Verbindung zu einem externen Gerät ist nur für einen der Knoten erforderlich. Weiterhin kann die Projektierung im Vorfeld erstellt sein oder werden. Die tatsächliche Konfigurierung der Knoten und/oder des Türkommunikationssystems kann aufgrund des Übermittelns der Projektierung und/oder der Konfigurationsparameter auch für sehr große Netzwerke sehr schnell erfolgen.

Ein erster Aspekt der Erfindung betrifft ein Verfahren zur Konfiguration eines Türkommunikationssystems gemäß einer Projektierung des Türkommunikationssystems, wobei das Türkommunikationssystem eine Mehrzahl Netzwerkknoten aufweist, wobei das Verfahren umfasst:
- Auswählen eines Inbetriebnahmeknotens, wobei ein erster Knoten der Mehrzahl Netzwerkknoten als Inbetriebnahmeknoten ausgewählt wird;
- Übermitteln der Projektierung an den Inbetriebnahmeknoten;
- Übermitteln der Projektierung und/oder Konfigurationsparameter der Projektierung ausgehend von dem Inbetriebnahmeknoten an die übrigen Knoten der Mehrzahl Netzwerkknoten, und Konfigurieren der Knoten mit einer der Projektierung entsprechenden Konfiguration.

Das Türkommunikationssystem kann auf IP Basis, und/oder SIP (session initiation protocol) Basis, beruhen und/oder einer solchen entsprechen. Das Türkommunikationssystem kann dezentral sein. In einigen Ausführungsformen kann das Türkommunikationssystem einem SIP-System entsprechen, wobei kein zentraler Server (z.B. für Registrierung und Verwaltung der Knoten) notwendig ist.

Ein Türkommunikationssystem kann Teil eines smart homes oder eines Gebäudeautomationssystems sein. Es kann vorgesehen sein, dass ein smart home, oder ein Gebäudeautomationssystem, ein Türkommunikationssystem umfassen kann.

Dadurch, dass die Projektierung über das Netzwerk verteilt ist oder wird, kann ein zentraler Server entfallen. Nach dem Konfigurieren kann jedem Knoten bekannt sein, mit welchen anderen Knoten er kommunizieren und/oder Daten austauschen kann. Es kann vorgesehen sein, dass mehrere oder jeder Knoten des Türkommunikationssystems nach dem Konfigurieren die Projektion und/oder Konfigurationsparameter hinterlegt haben und/oder auf diese zugreifen kann.

Es kann vorgesehen sein, dass jeder beliebige Knoten der Mehrzahl Netzwerkknoten als Inbetriebnahmeknoten ausgewählt sein oder werden kann, und/oder als Inbetriebnahmeknoten funktionieren, verwendet und/oder dienen kann.

Die Mehrzahl Netzwerkknoten kann Knoten, den ersten Knoten, einen zweiten Knoten, der Inbetriebsnahmeknoten, Außenstellenknoten, Innenstellenknoten und/oder Netzwerkverbindungsknoten umfassen.

Die Projektierung kann dabei zunächst nur an den Inbetriebnahmeknoten übermittelt werden. Anschließend kann die vollständige Parametrierung und/oder Konfigurierung der restlichen Knoten im System z.B. durch den gewählten Inbetriebnahmeknoten erfolgen.

Die Projektierung kann Konfigurationsparameter der Knoten umfassen. Die Projektierung und/oder Konfigurationsparameter können Einstellungen und/oder Parameter der jeweiligen Knoten umfassen.

Die Projektierung kann von einem externen Gerät übermittelt sein oder werden. Es kann vorgesehen sein, ein externes Gerät zum Konfigurieren eines Türkommunikationssystems nach einem erfindungsgemäßen Verfahren zu verwenden. Das externe Gerät kann ein Mobilgerät, z.B. ein Laptop, ein Smartphone, ein Tablet, und/oder ein PDA sein oder aufweisen. Alternativ oder zusätzlich kann das externe Gerät kann ein Server sein oder aufweisen. Das externe Gerät kann ein Computergerät und/oder eine Computereinheit sein oder aufweisen. Das externe Gerät kann ein Gerät sein, das nicht Teil des Türkommunikationssytems ist.

In einigen Ausführungsformen kann die Projektierung auch von einem anderen Gerät und/oder einem anderen Knoten an den Inbetriebnahmeknoten übermittelt sein oder werden.

Es kann vorgesehen sein, dass beim Konfigurieren der Knoten mit einer der Projektierung entsprechenden Konfiguration jeder Knoten der Mehrzahl Netzwerkknoten konfiguriert sein oder werden kann, oder nur die übrigen Knoten der Mehrzahl Netzwerkknoten konfiguriert sein oder werden können. Es kann vorgesehen sein, dass beim Konfigurieren der Knoten mit einer der Projektierung entsprechenden Konfiguration der Inbetriebnahmeknoten konfiguriert sein oder werden kann.

Es kann vorgesehen sein, dass der Inbetriebnahmeknoten nach dem Übermitteln der Projektierung an den Inbetriebnahmeknoten konfiguriert sein oder werden kann. In einigen Ausführungsformen kann der Inbetriebnahmeknoten vor dem Übermitteln der Projektierung und/oder der Konfigurationsparameter an die übrigen Knoten konfiguriert sein oder werden kann.

Ein Konfigurieren eines Knotens kann umfassen, den Knoten zur Kommunikation und/oder Datenaustausch mit einem oder mehreren anderen Knoten einzurichten. Ein Konfigurieren eines Knotens kann umfassen, Parameter und/oder Einstellungen eines Knotens zu definieren und/oder vorzugeben.

Ein Knoten kann ein Kommunikationsteilnehmer sein oder aufweisen, und/oder als Kommunikationsteilnehmer bezeichnet sein oder werden. Ein Knoten kann beispielsweise eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen sein oder aufweisen. Eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen kann beispielsweise einen Knoten aufweisen. Ein Knoten, eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen kann in einer Wohneinheit, in einer Gewerbeeinheit, in einem Innenraum, in einem geschlossenen Raum, in einem Gebäude, an oder bei einer Innenseite einer Tür, oder dergleichen angeordnet sein. Ein Knoten, eine Klingel, eine Sprechanlage, ein Lautsprecher, ein Mobilgerät, ein Bildschirm, eine Innenstation, eine Außenstation, eine sonstige Komponente eines Türkommunikationssystems oder dergleichen kann in einem Außenbereich, im freien, draußen, vor einer Wohneinheit, vor einem Innenraum, vor einem Gebäude, an oder bei einer Außenseite einer Tür, oder dergleichen angeordnet sein.

Beispielsweise kann durch die Kommunikation und/oder den Datenaustausch zwischen jeweiligen Knoten Daten, Mediendaten, z.B. Video und/oder Audio, Datentelegramme, ein Signal, oder dergleichen übermittelt sein oder werden. Es kann vorgesehen sein, dass die Knoten auf IP Basis, und/oder SIP Basis, miteinander kommunizieren und/oder Daten austauschen können.

Es kann vorgesehen sein, dass mindestens zwei, mehrere oder alle Knoten drahtlos miteinander kommunizieren und/oder Daten austauschen können, z.B. über WLAN. Alternativ oder zusätzlich kann vorgesehen sein, dass mindestens zwei, mehrere oder alle Knoten kabelgebunden miteinander kommunizieren und/oder Daten austauschen können, beispielsweise über ein BUS-System, z.B. KNX.

Die Kommunikation und/oder der Datenaustausch zwischen zwei Knoten kann bidirektional sein und/oder erfolgen.

Die Mehrzahl Netzwerkknoten kann mindestens einen, mehrere oder alle Knoten des Türkommunikationssystems umfassen. Ein Knoten kann ein Netzwerkknoten sein oder aufweisen. Ein Knoten kann ein Inbetriebnahmeknoten, ein Innenstellenknoten, ein Außenstellenknoten oder ein Netzwerkverbindungsknoten sein oder aufweisen.

Ein oder der Inbetriebnahmeknoten kann ein Außenstellenknoten sein oder aufweisen. In einigen Ausführungsformen kann ein beliebiger Außenstellenknoten als Inbetriebnahmeknoten ausgewählt sein oder werden. Der Inbetriebnahmeknoten kann ein Außenstellenknoten sein oder aufweisen.

Ein oder der Inbetriebnahmeknoten kann ein Innenstellenknoten sein oder aufweisen. In einigen Ausführungsformen kann ein beliebiger Innenstellenknoten als Inbetriebnahmeknoten ausgewählt sein oder werden. Der Inbetriebnahmeknoten kann ein Innenstellenknoten sein oder aufweisen.

Das Türkommunikationssystem kann ein erstes Netzwerk und ein zweites Netzwerk umfassen, die über mindestens einen Netzwerkverbindungsknoten miteinander verbunden sein können. Beim Übermitteln der Projektierung an die übrigen Knoten kann die Projektierung von dem ersten Netzwerk an das zweite Netzwerk über den Nerzwerkverbindungsknoten übermittelt werden. Alternativ oder zusätzlich kann die Projektierung beim Übermitteln der Projektierung an die übrigen Knoten von dem zweiten Netzwerk an das erste Netzwerk über den Nerzwerkverbindungsknoten übermittelt werden.

Es kann vorgesehen sein, dass mindestens ein Knoten des ersten Netzwerks ein Außenstellenknoten sein und/oder aufweisen kann. Bei dem Auswählen des Inbetriebnahmeknotens kann der oder ein Außenstellenknoten des ersten Netzwerks ausgewählt werden.

In einigen Ausführungsformen kann ein Außenstellenknoten "draußen", in einem Außenbereich, im freien, vor einem Gebäude, vor einer Tür oder dergleichen angeordnet sein. In einigen Ausführungsformen kann ein Innenstellenknoten "drinnen", in einem Innenbereich, in einem geschlossenen Raum, in einem Gebäude, in einer Wohnung, in einer Gewerbeeinheit, hinter einer Tür oder dergleichen angeordnet sein.

Alternativ oder zusätzlich kann das erste Netzwerk ein Außenstellennetzwerk und/oder das zweite Netzwerk ein Innenstellennetzwerk sein und/oder aufweisen. Es kann vorgesehen sein, dass das erste Netzwerk ein Innenstellennetzwerk und/oder das zweite Netzwerk ein Außenstellennetzwerk sein und/oder aufweisen kann. Beim Auswählen des Inbetriebnahmeknotens kann ein Knoten des ersten Netzwerks als Inbetriebnahmeknoten ausgewählt werden.

Es kann vorgesehen sein, dass ein Außenstellennetzwerk mindestens einen Außenstellenknoten aufweisen kann. Es kann vorgesehen sein, dass ein Außenstellennetzwerk nur Außenstellenknoten aufweisen kann, und/oder nur Außenstellenknoten und Netzwerkverbindungsknoten aufweisen kann. Es kann vorgesehen sein, dass ein Innenstellennetzwerk mindestens einen Innenstellenknoten aufweisen kann. Es kann vorgesehen sein, dass ein Innenstellennetzwerk nur Innenstellenknoten aufweisen kann, und/oder nur Innenstellenknoten und Netzwerkverbindungsknoten aufweisen kann.

Nach dem Konfigurieren der Knoten kann das Verfahren nochmals durchgeführt werden. Es kann vorgesehen sein, dass bei dem Auswählen des Inbetriebnahmeknotens ein zweiter Knoten der Mehrzahl der Knoten anstelle des ersten Knotens als Inbetriebnahmeknoten ausgewählt werden kann. Der zweite Knoten kann von dem ersten Knoten verschieden sein.

Die Projektierung kann computergestützt erstellt sein oder werden. In einigen Ausführungsformen kann die Projektierung mit einem Konfigurator erstellt sein oder werden. Der Konfigurator kann z.B. ein Software-Programm und/oder eine App sein oder aufweisen. In einigen Ausführungsformen kann die Projektierung mit und/oder von einem oder dem externen Gerät erstellt sein oder werden.

Es kann vorgesehen sein, dass für und/oder bei der Erstellung der Projektierung, z.B. mit dem Konfigurator, keine physikalischen Knoten benötigt werden. Die physikalischen Knoten können erst bei der Inbetriebnahme des Systems erforderlich sein. Die Projektierung des Systems kann somit nur bei der Erstellung der Konfiguration eine Fachkraft mit höherer Qualifikation benötigen. Die Inbetriebnahme kann auch durch eine Fachkraft mit niedrigerer Qualifikation durchgeführt werden.

Beim Übertragen der Projektierung und/oder der Konfigurationsparameter kann die Projektierung und/oder Konfigurationsparameter zwischen mindestens zwei, mehreren oder allen jeweils unmittelbar miteinander verbundenen Knoten übertragen werden. Es kann vorgesehen sein, dass sukzessive mindestens zwei, mehrere oder jeder der Mehrzahl Knoten konfiguriert werden. Alternativ oder zusätzlich kann beim Übertragen der Projektierung und/oder der Konfigurationsparameter kann die Projektierung und/oder Konfigurationsparameter der Inbetriebnahmeknoten die Projektierung und/oder die Konfigurationsparameter unmittelbar an mindestens einen, mehrere oder jeden der übrigen Knoten der Mehrzahl Netzwerkknoten übertragen.

Es kann vorgesehen sein, dass einer, mehrere oder alle Knoten eines Innenstellennetzwerks von einem mit dem Innenstellennetzwerk verbundenen Netzwerkverbindungsknoten konfiguriert sein oder werden können.

Es kann vorgesehen sein, wenn sich die IP-Adresse mindestens eines Knotens ändert, die Knoten nochmals entsprechend der Projektierung konfiguriert werden können. Damit können die Knoten ihre Funktion aufrechterhalten, auch wenn IP-Adressen der einzelnen Knoten sich ändern. Es kann vorgesehen sein, dass sich das Türkommunikationssystem in solchen Situationen automatisch rekonfiguriert.

Mindestens ein in der Projektierung vorgesehener Knoten kann nach dem Konfigurieren dem Türkommunikationssystem hinzugefügt werden. Die Projektierung und/oder die Konfigurationsparameter können an den neu hinzugefügten Knoten übertragen werden, beispielsweise von dem Inbetriebnahmeknoten und/oder einem mit dem hinzugefügten Knoten unmittelbar verbundenen Knoten. Der hinzugefügte Knoten kann entsprechend der Projektierung konfiguriert werden. Damit können projektierte Kommunikationsteilnehmer auch zu einem späteren Zeitpunkt verbaut werden. Diese können z.B. automatisch gefunden werden, und anschließend die im Projekt für sie erstellte Konfiguration erhalten und/oder entsprechend konfiguriert sein oder werden.

Nach dem Konfigurieren können mindestens zwei Knoten miteinander Daten austauschen.

Der Inbetriebnahmeknoten kann eines oder mehrere Zertifikate erstellen, um nach dem Konfigurieren eine verschlüsselte Kommunikation zwischen den Knoten zu ermöglichen. Das oder die Zertifikate können nach dem Konfigurieren der Knoten erstellt sein oder werden. Es kann vorgesehen sein, das Zertifikat an einen oder mehrere Knoten der Mehrzahl Netzwerkknoten zu übermitteln. In einigen Ausführungsformen kann für jeden Knoten ein separates Zertifikate erstellt sein oder werden. Eines, mehrere oder alle Zertifikate können projektbezogen erstellt sein oder werden. Das Zertifikat kann z.B. ein Public-Key-Zertifikat sein oder aufweisen. Es kann vorgesehen sein, dass die Verschlüsselung und/oder das Zertifikat einer TSL (transport layer security) Verschlüsselung entsprechen und/oder ähnlich sein kann.

Der Datenaustausch und/oder die Kommunikation kann verschlüsselt erfolgen, beispielsweise mittels einem oder dem von dem Inbetriebnahmeknoten erstellten Zertifikat. Das oder die Zertifikate können periodisch erneuert werden und/oder periodisch von dem Inbetriebnahmeknoten erstellt werden. Es kann vorgesehen sein, die eingesetzten Verschlüsselungsverfahren zu erneuern und/oder zu aktualisieren, z.B. wenn neuere und noch sicherere Algorithmen mit der Zeit entwickelt werden.

Wenn die die Kommunikation und/oder der Datenaustausch zwischen Knoten verschlüsselt erfolgt, kann eine Vertraulichkeit der Kommunikation zwischen zwei Knoten sichergestellt sein oder werden. In einigen Ausführungsformen können projektbezogene Zertifikate eingesetzt, verwendet und/oder erstellt sein oder werden. Somit kann sichergestellt sein, dass nur Knoten, die Bestandteil der aktuellen Projektierung sind, miteinander kommunizieren und/oder Daten austauschen können.

Es kann vorgesehen sein, dass Änderungen der Projektion und/oder der Konfigurationsparameter mindestens eines, mehrerer oder aller Knoten auf mindestens einem oder mehreren anderen Knoten hinterlegt werden können.

Dadurch kann z.B. sichergestellt sein oder werden, dass keine Konfigurationsänderungen, die z.B. durch Nutzer des Systems gemacht werden, verloren gehen können. Es kann vorgesehen sein, dass durchgeführte Konfigurationsänderungen auf weiteren Knoten im System redundant abgelegt werden und/oder redundant abzulegen. Diese können wiederhergestellt werden, für den Fall, dass der aktuelle Inbetriebnahme Knoten ausfällt, defekt ist und/oder nicht verfügbar ist.

Ein weiterer Aspekt der Erfindung betrifft ein Türkommunikationssystem umfassend eine Mehrzahl Netzwerkknoten, wobei das Türkommunikationssystem mit einem erfindungsgemäßen Verfahren konfiguriert ist.

Die Knoten der Mehrzahl Netzwerkknoten können dazu eingerichtet sein, miteinander zu kommunizieren und/oder Daten auszutauschen, bevorzugt verschlüsselt miteinander zu kommunizieren und/oder verschlüsselt Daten auszutauschen.

Das Türkommunikationssystem kann ein erstes Netzwerk, ein zweites Netzwerk und mindestens einen Netzwerkverbindungsknoten aufweisen. Das erste Netzwerk kann mit dem zweiten Netzwerk über den mindestens einen Netzwerkverbindungsknoten verbunden sein.

Das erste Netzwerk kann mindestens einen Außenstellenknoten aufweisen, und/oder das zweite Netzwerk kann mindestens einen Innenstellenknoten aufweisen. Alternativ oder zusätzlich kann das erste Netzwerk ein Außenstellennetzwerk und/oder das zweite Netzwerk ein Innenstellennetzwerk sein und/oder aufweisen, oder das erste Netzwerk ein Innstellennetzwerk und/oder das zweite Netzwerk ein Außenstellennetzwerk sein und/oder aufweisen.

Die Erfindung wird anhand der nachfolgenden Figuren weiter erläutert. Es zeigen:
- Fig. 1:: eine beispielhafte Ausführungsform eines erfindungsgemäßen Türkommunikationssystems; und
- Fig. 2:: eine andere beispielhafte Ausführungsform eines erfindungsgemäßen Türkommunikationssystem;

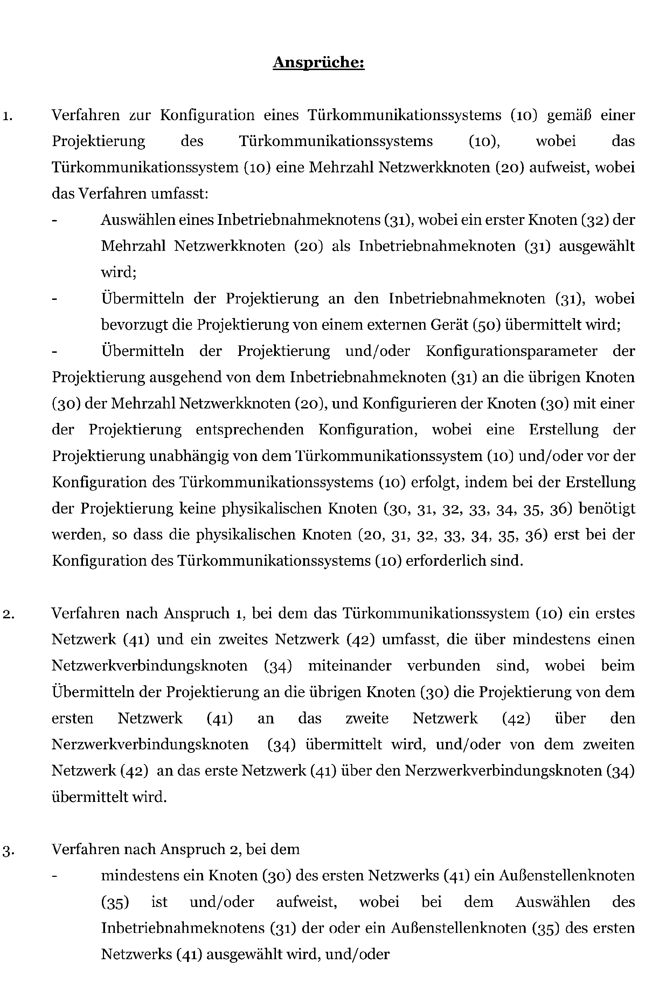

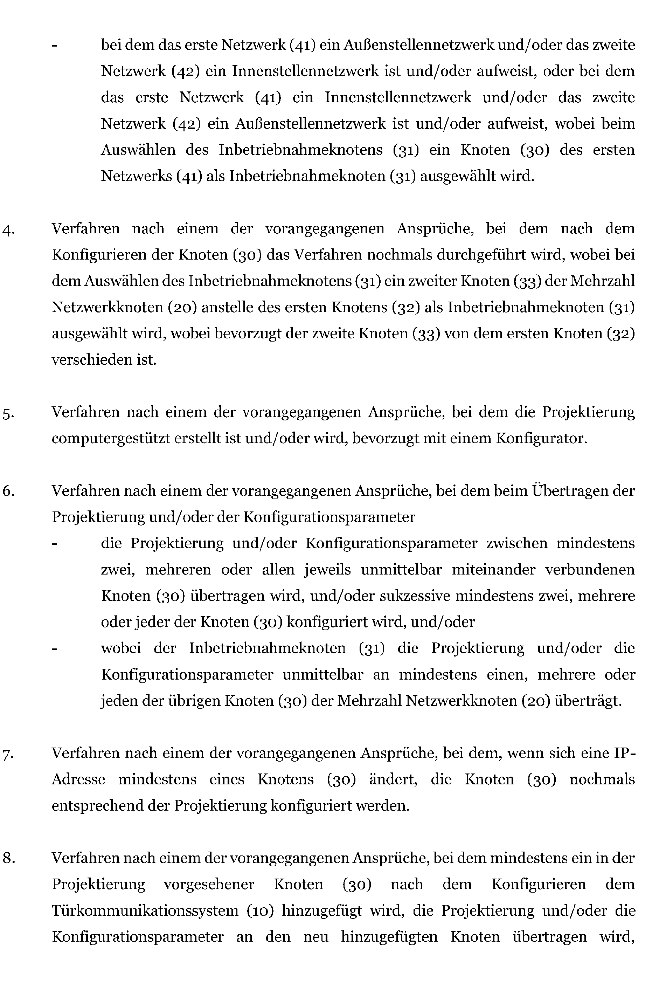

Die Figuren 1 und 2 zeigen beispielhafte erfindungsgemäße Ausführungsformen eines Türkommunikationssystems 10, die mit einem erfindungsgemäßen Verfahren konfiguriert sind und/oder werden.

Das Türkommunikationssystem 10 kann ein dezentrales System sein oder aufweisen, und/oder einem dezentralen System entsprechen. Es kann vorgesehen sein, dass das Türkommunikationssystem 10 keine zentrale Komponente und/oder keinen zentralen Server haben kann. Das Türkommunikationssystem 10 kann auf IP Basis, und/oder SIP (session initiation protocol) Basis, beruhen und/oder einer solchen entsprechen. In einigen Ausführungsformen kann das Türkommunikationssystem 10 einem SIP-System entsprechen, wobei kein zentraler Server (z.B. für Registrierung und Verwaltung der Knoten) notwendig ist.

Das Türkommunikationssystem 10 kann Teil eines smart homes oder eines Gebäudeautomationssystems sein. Es kann vorgesehen sein, dass ein smart home, oder ein Gebäudeautomationssystem, das Türkommunikationssystem 10 umfassen kann. In einigen Ausführungsformen kann vorgesehen sein, dass das Türkommunikationssystem 10 mit mindestens einem anderen Gerät des smart homes oder des Gebäudeautomationssystems verbunden sein kann, und/oder Daten austauschen oder kommunizieren kann.

Das Türkommunikationssystem 10 umfasst eine Mehrzahl Netzwerkknoten 20. Die Mehrzahl Netzwerkknoten 20 kann eine Mehrzahl Knoten 30 umfassen. Ein Knoten 30 kann ein Netzwerkknoten sein oder aufweisen. Ein Knoten 30 kann ein Inbetriebnahmeknoten 31, ein Innenstellenknoten 36, ein Außenstellenknoten 35 oder ein Netzwerkverbindungsknoten 34, ein erster Knoten 33 und/oder ein zweiter Knoten 33 sein oder aufweisen. Die Mehrzahl Netzwerkknoten 20 kann Knoten 30, den ersten Knoten 32 und/oder den zweiten Knoten 33 umfassen. Der erste Knoten 32 kann ein Außenstellenknoten 35, ein Innenstellenknoten 36 und/oder ein Netzwerkverbindungsknoten 34 sein oder aufweisen. Der zweite Knoten 33 kann ein Außenstellenknoten 35, ein Innenstellenknoten 36 und/oder ein Netzwerkverbindungsknoten 34 sein oder aufweisen. In einigen Ausführungsformen kann der erste Knoten 32 kann von dem zweiten Knoten 33 verschieden sein.

Ein Knoten 30 kann ein Kommunikationsteilnehmer sein oder aufweisen, und/oder als Kommunikationsteilnehmer bezeichnet sein oder werden. Ein Knoten 30 kann beispielsweise eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen sein oder aufweisen. Eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen kann beispielsweise einen Knoten 30 aufweisen. Ein Knoten 30, eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen kann in einer Wohneinheit, in einer Gewerbeeinheit, in einem Innenraum, in einem geschlossenen Raum, in einem Gebäude, an oder bei einer Innenseite einer Tür, in einem Außenbereich, im freien, draußen, vor einer Wohneinheit, vor einem Innenraum, vor einem Gebäude, an oder bei einer Außenseite einer Tür, oder dergleichen angeordnet sein.

Es kann vorgesehen sein, dass die Knoten 30 drahtlos miteinander kommunizieren und/oder Daten austauschen können, und/oder dazu eingerichtet sein können. Alternativ oder zusätzlich kann vorgesehen sein, dass die Knoten 30 kabelgebunden miteinander kommunizieren und/oder Daten austauschen können, und/oder dazu eingerichtet sein können, beispielsweise über ein BUS-System wie z.B. KNX. Die Kommunikation und/oder der Datenaustausch zwischen zwei Knoten 30 kann bidirektional sein und/oder erfolgen.

Das Türkommunikationssystem 10 kann eines oder mehrere Netzwerke 40 umfassen. Das Türkommunikationssystem 10 kann beispielsweise ein erstes Netzwerk 41 und ein zweites Netzwerk 42 aufweisen. In einigen Ausführungsformen kann das Türkommunikationssystem 10 mehr als zwei Netzwerke 40 aufweisen, beispielsweise eines oder mehrere weitere Netzwerke 43. Das erste Netzwerk 41, zweite Netzwerk 42 und/oder weitere Netzwerk 43 kann ein Netzwerk 40 des Türkommunikationssystems 10 sein.

Es kann vorgesehen sein, dass jedes Netzwerk 40 mindestens einen Knoten 30 aufweist. Ein Knoten 30 kann ein Netzwerkverbindungsknoten 34 sein oder aufweisen. Ein Knoten 30 kann ein Außenstellenknoten 35 sein oder aufweisen. Ein Knoten 30 kann ein Innenstellenknoten 36 sein oder aufweisen. Es kann vorgesehen sein, dass das Türkommunikationssystem 10 und/oder die Mehrzahl Netzwerkknoten 20 mindestens einen oder mehrere Netzwerkverbindungsknoten 34, Außenstellenknoten 35 und/oder Innenstellenknoten 36 aufweisen kann. Es kann vorgesehen sein, dass ein Netzwerk 40, z.B. das erste Netzwerk 41, das zweite Netzwerk 42 und/oder ein weiteres Netzwerk 43 mindestens einen Außenstellenknoten 35 und/oder mindestens einen Innenstellenknoten 36 aufweisen kann.

Weist ein Netzwerk 40, z.B. das erste Netzwerk 41, das zweite Netzwerk 42 und/oder ein weiteres Netzwerk 43, nur Außenstellenknoten 35 auf, und/oder sind alle Knoten 30 eines Netzwerks 40 Außenstellenknoten 35, so kann das entsprechende Netzwerk 40 ein Außenstellennetzwerk sein oder aufweisen, und/oder als Außenstellennetzwerk bezeichnet sein oder werden. Weist ein Netzwerk 40, z.B. das erste Netzwerk 41, das zweite Netzwerk 42 und/oder ein weiteres Netzwerk 43, nur Außenstellenknoten 35 und mindestens einen Netzwerkverbindungsknoten 34 auf, und/oder sind alle Knoten 30 eines Netzwerks 40 bis auf Netzwerkverbindungsknoten 34 Außenstellenknoten 35, so kann das entsprechende Netzwerk 40 ein Außenstellennetzwerk sein oder aufweisen, und/oder als Außenstellennetzwerk bezeichnet sein oder werden.

Weist ein Netzwerk 40, z.B. das erste Netzwerk 41, das zweite Netzwerk 42 und/oder ein weiteres Netzwerk 43, nur Innenstellenknoten 36 auf, und/oder sind alle Knoten 30 eines Netzwerks 40 Innenstellenknoten 36, so kann das entsprechende Netzwerk 40 ein Außenstellennetzwerk sein oder aufweisen, und/oder als Außenstellennetzwerk bezeichnet sein oder werden. Weist ein Netzwerk 40, z.B. das erste Netzwerk 41, das zweite Netzwerk 42 und/oder ein weiteres Netzwerk 43, nur Innenstellenknoten 36 und mindestens einen Netzwerkverbindungsknoten 34 auf, und/oder sind alle Knoten 30 eines Netzwerks 40 bis auf Netzwerkverbindungsknoten 34 Innenstellenknoten 36, so kann das entsprechende Netzwerk 40 ein Außenstellennetzwerk sein oder aufweisen, und/oder als Außenstellennetzwerk bezeichnet sein oder werden.

Es kann aber auch vorgesehen sein, dass mindestens ein Netzwerk 40 mindestens einen Außenstellenknoten 35 und mindestens einen Innenstellenknoten 36 aufweisen kann.

Netzwerkverbindungsknoten 34 können verschiedene Netzwerke 40 miteinander verbinden. Beispielsweise kann ein Netzwerkverbindungsknoten 34 ein oder das erste Netzwerk 41 mit einem oder dem zweiten Netzwerk 42 verbinden. Beispielsweise kann ein Netzwerkverbindungsknoten 34 ein oder das erste Netzwerk 41 mit einem weiteren Netzwerk 43 verbinden. Beispielsweise kann ein Netzwerkverbindungsknoten 34 ein oder das zweite Netzwerk 42 mit einem weiteren Netzwerk 43 verbinden.

In einigen Ausführungsformen können die von einem Netzwerkverbindungsknoten 34 verbundenen Netzwerke 40 den Netzwerkverbindungsknoten 34 umfassen, bzw. der Netzwerkverbindungsknoten 34 zu den entsprechenden Netzwerken 40 gezählt sein oder werden. Alternativ können die von einem Netzwerkverbindungsknoten 34 verbundenen Netzwerke 40 den Netzwerkverbindungsknoten 34 nicht umfassen, bzw. der Netzwerkverbindungsknoten 34 nicht zu den entsprechenden Netzwerken 40 gezählt sein oder werden.

Beispielsweise kann das erste Netzwerk 41 mindestens einen Außenstellenknoten 35 und mindestens einen Innenstellenknoten 36 aufweisen, und das zweite Netzwerk 42 einen oder mehrere Innenstellenknoten 36 aufweisen. Beispielsweise kann das erste Netzwerk 41 mindestens ein Außenstellenknoten 35 aufweisen, und das zweite Netzwerk 42 ein oder mehrere Innenstellenknoten 36 aufweisen.

In einigen Ausführungsformen kann vorgesehen sein, dass das erste Netzwerk 41 keine Innenstellenknoten 36 aufweist. In einigen Ausführungsformen kann vorgesehen sein, dass das zweite Netzwerk 42 keinen Außenstellenknoten 35 aufweist.

Das Türkommunikationssystem 10 und/oder die Knoten 30 können entsprechend einer Projektierung konfiguriert sein oder werden. Die Projektierung kann umfassen, welche der Knoten 30 miteinander kommunizieren und/oder Daten austauschen können. Die Projektierung kann Verbindungen der Knoten 30 festlegen und/oder definieren. Die Projektierung kann Konfigurationsparameter, z.B. der Knoten 30, umfassen. In einigen Ausführungsformen kann die Projektierung ein "Verbindungsplan" der Knoten 30 und/oder des Türkommunikationssystems 10 sein oder aufweisen.

Beispielsweise kann die Projektierung definieren, dass ein Knoten 30 mit einem oder mehreren anderen Knoten 30 kommunizieren und/oder Daten austauschen kann, aber mit einem oder mehreren noch anderen Knoten 30 nicht kommunizieren und/oder Daten austauschen kann.

Beispielsweise kann die Projektierung umfassen, dass ein Knoten 30 mit einem oder mehreren anderen Knoten 30 unmittelbar verbunden sein oder werden kann, und/oder unmittelbar kommunizieren und/oder Daten austauschen kann, und mit mindestens einem anderen noch anderen Knoten 30 nicht unmittelbar verbunden sein oder werden kann, und/oder nicht mit mindestens einem noch anderen Knoten 30 unmittelbar kommunizieren und/oder Daten austauschen kann.

Die Projektierung kann computergestützt erstellt sein oder werden. In einigen Ausführungsformen kann die Projektierung mit einem Konfigurator erstellt sein oder werden. Der Konfigurator kann z.B. ein Software-Programm und/oder eine App sein oder aufweisen. In einigen Ausführungsformen kann die Projektierung mit und/oder von einem oder dem externen Gerät 50 erstellt sein oder werden.

Es kann vorgesehen sein, dass für und/oder bei der Erstellung der Projektierung, z.B. mit dem Konfigurator, keine physikalischen Knoten benötigt werden. Die physikalischen Knoten (z.B. Knoten 30, Inbetriebnahmeknoten 31, erster Knoten 32, zweiter Knoten 33, Netzwerkverbindungsknoten 34, Außenstellenknoten 35 und/oder Innenstellenknoten 36) können erst bei der Inbetriebnahme des Systems erforderlich sein. Die Projektierung des Türkommunikationssystems 10 kann somit nur bei der Erstellung der Konfiguration eine Fachkraft mit höherer Qualifikation benötigen. Die Inbetriebnahme kann auch durch eine Fachkraft mit niedrigerer Qualifikation durchgeführt werden.

Es kann vorgesehen sein, dass die Knoten 30 nach dem Konfigurieren des Türkommunikationssystems 10 entsprechend der Projektierung und/oder der Konfigurationsparameter miteinander kommunizieren und/oder Daten austauschen können.

Es kann vorgesehen sein, dass ein Knoten 30 mit einem weiteren Knoten 30 verbunden sein kann, und der weitere Knoten 30 mit einem noch weiteren Knoten 30 verbunden sein kann. Der Knoten 30 kann mit dem noch weiteren Knoten 30 über den weiteren Knoten 30 kommunizieren und/oder Daten austauschen. Beispielsweise können Daten von dem Knoten 30 an den weiteren Knoten 30 übermittelt sein und/oder werden, und von dem weiteren Knoten 30 an den noch weiteren Knoten 30 weitergeleitet sein und/oder werden.

Es kann vorgesehen sein, dass die Projektierung und/oder die Kommunikationsparameter Informationen dahingehend umfassen, welche Knoten 30 welchem Netzwerk 40, 41, 42, 43 zuzuordnen ist, und/oder zugeordnet sein oder werden kann. Es kann vorgesehen sein, dass ein Knoten 30, z.B. ein Netzwerkverbindungsknoten 34, einem oder mehr, z.B. zwei oder mehr, Netzwerken 40, 41, 42, 43 zugeordnet sein oder werden kann.

Die Projektierung kann unabhängig und/oder vor dem Konfigurieren des Türkommunikationssystems 10 erstellt sein oder werden.

Das Türkommunikationssystem 10 kann entsprechend der Projektierung konfiguriert sein oder werden. Dabei wird zunächst ein Inbetriebnahmeknoten 31 ausgewählt. Der Inbetriebnahmeknoten 31 kann ein erster Knoten 32 des Türkommunikationssystems 10 sein und/oder aufweisen. Es kann vorgesehen sein, dass der Inbetriebnahmeknoten 31 beliebig ausgewählt sein oder werden kann, d.h. ein beliebiger Knoten 30 des Türkommunikationssystems 10 ausgewählt sein oder werden kann.

In einigen Ausführungsformen kann vorgesehen sein, dass ein Außenstellenknoten 35 des Türkommunikationssystems 10 als Inbetriebnahmeknoten 31 ausgewählt sein oder werden kann.

Die Projektierung wird an den Inbetriebnahmeknoten 31 übermittelt. Es kann vorgesehen sein, dass die Projektierung von einem externen Gerät 50 an den Inbetriebnahmeknoten 31 übermittelt sein oder werden kann. Die Übermittlung von dem externen Gerät 50 an den Inbetriebnahmeknoten 31, und/oder die Verbindung über die die Projektion und/oder die Konfigurationsparameter von dem externen Gerät 50 an den Inbetriebnahmeknoten 31 sind oder werden, ist beispielsweise in Figur 1 und 2 durch eine gepunktete Linie dargestellt.

Beim Auswählen des Inbetriebnahmeknotens 31 kann ein Knoten 30 des ersten Netzwerks 41 als Inbetriebnahmeknoten 31 ausgewählt werden, z.B. ein Außenstellenknoten 35. In einigen Ausführungsformen kann alternativ oder zusätzlich ein Innenstellenknoten 36 als Inbetriebnahmeknoten 31 auzsgewählt sein oder werden.

Das externe Gerät 50 kann beispielsweise ein Mobilgerät sein oder aufweisen. Das externe Gerät 50 kann ein Laptop, Smartphone, Tablett, PDA und/oder ein Handgerät sein oder aufweisen. Alternativ oder zusätzlich kann das externe Gerät 50 ein Server sein oder aufweisen. Das externe Gerät 50 kann ein Computergerät und/oder Computereinheit sein oder aufweisen. Es kann vorgesehen sein, dass ein oder das externe Gerät zur Durchführung eines erfindungsgemäßen Verfahrens verwendet werden kann.

Die Projektierung und/oder Konfigurationsparameter der Projektierung werden nun ausgehend von dem Inbetriebnahmeknoten 31 an die übrigen Knoten 30 der Mehrzahl Netzwerkknoten 20 übermittelt.

Die Projektierung und/oder Konfigurationsparameter können von dem Inbetriebnahmeknoten 31 an die mit dem Inbetriebnahmeknoten 31 verbundenen, beispielsweise unmittelbar verbundenen, Knoten 30 übermittelt sein oder werden. Beispielsweise ist in den Figuren 1 und 2 die entsprechende Übermittlung der Projektion und/oder der Konfigurationsparameter, und/oder die Verbindungen, entlang und/oder über derer die Projektion und/oder Konfigurationsparameter übermittelt sein oder werden können, mit durchgezogenen schwarzen Linien dargestellt. Anschließend können die mit dem Inbetriebnahmeknoten 31 verbundenen Knoten 30, die von dem Inbetriebnahmeknoten 31 die Projektierung und/oder Konfigurationsparameter empfangen haben, die Projektierung und/oder Konfigurationsparameter an weitere verbundene Knoten 30 übermitteln, wie ebenfalls in den Figuren 1 und 2 beispielhaft mit schwarzen Linien dargestellt.

Es kann vorgesehen sein, dass ein Knoten 30 die Projektierung und/oder Konfigurationsparameter an mindestens einen weiteren mit dem Knoten 30 verbundenen anderen Knoten 30 übertragen kann.

Beispielsweise kann der Inbetriebnahmeknoten 31 ein Knoten 30 und/oder ein erster Knoten 31 eines ersten Netzwerks 41 sein. Es kann vorgesehen sein, dass der Inbetriebnahmeknoten 31 die Projektierung und/oder Konfigurationsparameter an einen Netzwerkverbindungsknoten 34 zwischen dem ersten Netzwerk 41 und dem zweiten Netzwerk 42 übertragen kann.

Es kann vorgesehen sein, dass der Inbetriebnahmeknoten 31 die Projektierung und/oder und Konfigurationsparameter an alle Knoten 30, die sich in demselben Netzwerk 40 wieder Inbetriebnahmeknoten 31 befinden können und/oder gemäß der Projektierung in demselben Netzwerk 40 vorgesehen sein können, übertragen kann. Alternativ oder zusätzlich kann der Inbetriebnahmeknoten 31 die Projektierung und/oder Konfigurationsparameter an mindestens einen Knoten 30 übertragen, und der Knoten 30 die Projektierung und/oder Konfigurationsparameter an ein weiteren Knoten 30 übertragen.

Es kann vorgesehen sein, dass der Netzwerkverbindungsknoten 34 die Projektierung und/oder Konfigurationsparameter an mindestens einen, mehrere oder alle Knoten 30 eines mit dem Netzwerksmindestlohn 34 verbundenen Netzwerks 40, beispielsweise dem zweiten Netzwerk 42 und/oder einem weiteren Netzwerk 42, übertragen kann.

Es kann vorgesehen sein, dass einer, mehrere oder alle Knoten 30, 35 eines Innenstellennetzwerks von einem mit dem Innenstellennetzwerk verbundenen Netzwerkverbindungsknoten 34 konfiguriert sein oder werden können.

Die Projektierung und/oder Konfigurationsparameter können sukzessive in dem Türkommunikationssystem 10 verteilt sein oder werden. Die Verteilung der Projektierung und/oder Konfigurationsparameter kann ausgehend von dem Inbetriebnahmeknoten 31 erfolgen. Damit kann die Projektierung und/oder die Konfigurationsparameter schnell in dem Türkommunikationssystem 10 verteilt sein oder werden.

Es kann vorgesehen sein, dass nach dem Konfigurieren der Mehrzahl Netzwerkknoten 20 das Verfahren nochmals durchgeführt werden kann. Dabei kann ein von dem ersten Knoten 32, der als Inbetriebnahmeknoten 31 bei einer vorherigen Durchführung des Verfahrens ausgewählt worden sein kann, verschiedener zweiter Knoten 33 als Inbetriebnahmeknoten 31 ausgewählt werden, vergleiche z.B. die Zusammenschau der Figuren 1 und 2.

Anschließend kann von dem Inbetriebnahmeknoten 31 bzw. dem zweiten Knoten 33 ausgehend das Türkommunikationssystem 10 und/oder die Knoten 30 wie vorstehend beschrieben konfiguriert sein oder werden. Insbesondere kann die Projektion und/oder Konfigurationsparameter von dem zweiten Knoten 33, der als Inbetriebnahmeknoten 31 ausgewählt sein oder werden kann, an die übrigen Knoten 30 des Türkommunikationssystems 10 übertragen sein oder werden, beispielsweise wie vorstehend beschrieben. Es kann vorgesehen sein, dass der zweite Knoten 33 ein von dem ersten Knoten 32 verschiedener Knoten ist. Alternativ oder zusätzlich kann allerdings auch vorgesehen sein, dass der erste Knoten 32 mit dem zweiten Knoten 33 bei nochmaliger und/oder wiederholter Durchführung des Verfahrens identisch sein kann.

Der zweite Knoten 33 kann in einigen Ausführungsformen die Projektierung und/oder Konfigurationsdaten bereits vorliegen und/oder gespeichert haben, beispielsweise aufgrund einer vorherigen Durchführung des Verfahrens. Es kann vorgesehen sein, dass die wiederholte und/oder nochmalige Durchführung des Verfahrens mit den zweiten Knoten 33 als Inbetriebnahmeknoten 31 erfolgen kann, ohne dass die Projektierung von einem externen Gerät 50 dem zweiten Knoten 33 und/oder Inbetriebnahmeknoten 31 übermittelt werden muss. Alternativ oder zusätzlich kann in einigen Ausführungsformen vorgesehen sein, dass bei der wiederholten und/oder nochmalige Durchführung des Verfahrens die Projektierung dem zweiten Knoten 33 und/oder dem Inbetriebnahmeknoten 31 von dem externen Gerät 50 übermittelt sein oder werden kann, und die übermittelte Projektierung und/oder Konfigurationsdaten anschließend von dem zweiten Knoten 33 und/oder dem Inbetriebnahmeknoten 31 an die übrigen Knoten 30 übermittelt sein oder werden kann.

Es kann vorgesehen sein, dass wenn sich eine IP-Adresse eines oder mehrere Knoten 30 ändert, die Mehrzahl Netzwerkknoten 20 nochmals konfiguriert werden können. Beispielsweise kann der Inbetriebnahmeknoten 31 feststellen, dass die IP-Adresse eines oder mehrere Knoten 30 geändert ist oder wird. In diesem Falle kann der Inbetriebnahmeknoten 31 das Türkommunikationssystem 10 nochmals derart konfigurieren, dass sich die Projektierung und/oder eine der Projektierung entsprechende Verbindung der Knoten 30 unter Berücksichtigung der geänderten IP-Adresse ergibt. Insbesondere kann sichergestellt sein oder werden, dass die von der Projektierung vorgesehene Verbindungen und/oder Datenübertragung zwischen den Knoten 30 des Türkommunikationssystems 10 auch bei der oder den geänderten IP-Adresse mindestens eines der Knoten 30 möglich sein kann. Es kann vorgesehen sein, dass sich das Türkommunikationssystem 10 automatisch rekonfiguriert, wenn eine geänderte IP-Adresse erkannt wird.

Alternativ oder zusätzlich kann einer der Knoten 30 feststellen, dass die IP-Adresse eines oder mehrere Knoten 30 geändert ist oder wird. In diesem Falle kann der Knoten 30 als Inbetriebnahmeknoten 31 des Türkommunikationssystem 10 fungieren. Der Knoten 30 kann als Inbetriebnahmeknoten 31 dienen, da der Knoten 30 die Projektierung kennen kann und/oder die Projektierung und/oder Konfigurationsdaten auf dem Knoten 30 hinterlegt sein können. Alternativ oder zusätzlich kann der Knoten 30 die Projektierung und/oder Konfigurationsdaten aufrufen und/oder abrufen, beispielsweise von einem anderen Knoten 30 des Türkommunikationssystems 10. Der Knoten 30 kann als Inbetriebnahmeknoten 31 das Türkommunikationssystem 10 nochmals derart konfigurieren, dass sich die Projektierung und/oder eine der Projektierung entsprechende Verbindung der Knoten 30 unter Berücksichtigung der geänderten IP-Adresse ergibt. Insbesondere kann sichergestellt sein oder werden, dass die von der Projektierung vorgesehene Verbindungen und/oder Datenübertragung zwischen den Knoten 30 des Türkommunikationssystems 10 auch bei der oder den geänderten IP-Adresse mindestens eines der Knoten 30 möglich sein kann. Es kann vorgesehen sein, dass sich das Türkommunikationssystem 10 automatisch rekonfiguriert, wenn eine geänderte IP-Adresse erkannt wird.

Nach dem Konfigurieren können mindestens zwei Knoten 30 miteinander Daten austauschen und/oder miteinander kommunizieren. Dabei kann vorgesehen sein, dass die Knoten 30 entsprechend der Projektierung miteinander verbunden sein können, und/oder miteianderer entsprechend der Projektierung Daten austauschen und/oder kommunizieren können. Dies ist beispielsweise in Figur 1 und 2 mittels gestrichelter Linien dargestellt, und/oder die Verbindungen entlang und/oder über die Knoten 30 miteinander kommunizieren oder Daten austauschen können, ist beispielsweise mit gestrichelten Linien in Figur 1 und 2 dargestellt.

Der Inbetriebnahmeknoten 31 kann eines oder mehrere Zertifikate erstellen. Das oder die Zertifikate können ein verschlüsselten Datenaustausch und/oder eine verschlüsselte Kommunikation zwischen den Knoten 30 ermöglichen. Es kann vorgesehen sein, das Zertifikat an einen oder mehrere Knoten 30 zu übermitteln. In einigen Ausführungsformen kann für jeden Knoten 30 ein separates Zertifikat erstellt sein oder werden. Das oder die Zertifikate können periodisch erneuert werden und/oder periodisch von dem Inbetriebnahmeknoten 31 erstellt werden. Es kann vorgesehen sein, die eingesetzten Verschlüsselungsverfahren zu erneuern und/oder zu aktualisieren, z.B. wenn neuere und noch sicherere Algorithmen mit der Zeit entwickelt werden.

In einigen Ausführungsformen kann das Zertifikat ein Public-Key-Zertifikat sein oder aufweisen. Es kann vorgesehen sein, dass die Verschlüsselung und/oder das Zertifikat einer TSL (transport layer security) Verschlüsselung entsprechen und/oder ähnlich sein kann.

Es kann vorgesehen sein, dass die Projektion und/oder Konfigurationsparameter auf mindestens einem, mehreren oder allen Knoten 30 hinterlegt sein oder werden können. Wenn sich die Projektierung und/oder Konfigurationsparameter ändern, so können die Änderung, und/oder die geänderte Projektierung und/oder geänderte Konfigurationsparameter, auf einem, mehreren oder allen Knoten 30 hinterlegt sein oder werden.

Mindestens ein in der Projektierung vorgesehener Knoten 30 kann nach dem Konfigurieren dem Türkommunikationssystem 10 hinzugefügt werden. Die Projektierung und/oder die Konfigurationsparameter können an den neu hinzugefügten Knoten 30 übertragen werden, beispielsweise von dem Inbetriebnahmeknoten 31 und/oder einem mit dem hinzugefügten Knoten 30 unmittelbar verbundenen Knoten 30. Der hinzugefügte Knoten 30 kann entsprechend der Projektierung konfiguriert werden. Damit können projektierte Knoten 30 auch zu einem späteren Zeitpunkt verbaut werden. Diese können z.B. automatisch gefunden werden, und anschließend die im Projekt für sie erstellte Konfiguration erhalten und/oder entsprechend konfiguriert sein oder werden.

Ein erfindungsgemäßes Türkommunikationssystem 10 kann eine Mehrzahl Netzwerkknoten 20 umfassen, die gemäß einem erfindungsgemäßen Verfahren konfiguriert sein können.

Die Knoten 30 des Türkommunikationssystems 10 können dazu eingerichtet sein, miteinander zu kommunizieren und/oder Daten auszutauschen. Die Projektierung kann dabei umfassen, welche Knoten 30 der Mehrzahl Netzwerkknoten mit welchen anderen Knoten 30 kommunizieren und/oder Daten austauschen können. Die Kommunikation und/oder der Datenaustausch kann verschlüsselt sein, und/oder die Knoten 30 können dazu eingerichtet sein, verschlüsselt miteinander zu kommunizieren und/oder verschlüsselt Daten auszutauschen.

Das Türkommunikationssystem 10 kann ein erstes Netzwerk 41 und ein zweites Netzwerk 42 aufweisen. Das erste Netzwerk 41 kann über einen oder mehrere Netzwerkverbindungsknoten 34 mit dem zweiten Netzwerk 42 verbunden sein.

Das erste Netzwerk 41 kann mindestens einen Außenstellenknoten 35 aufweisen. Das zweite Netzwerk 42 kann mindestens einen Innenstellenknoten 36 aufweisen. Alternativ oder zusätzlich kann das erste Netzwerk 41 ein Außenstellennetzwerk sein oder aufweisen, und/oder das zweite Netzwerk 42 ein Innstellennetzwerk sein oder aufweisen. Es kann auch vorgesehen sein, dass das erste Netzwerk ein Innstellennetzwerk und/oder das zweite Netzwerk ein Außenstellennetzwerk sein und/oder aufweisen kann.

Die in den Ansprüchen, der Beschreibung und den Figuren offenbarten Merkmale können einzeln oder in beliebiger Kombination für die Verwirklichung der Erfindung wesentlich sein.

### Bezugszeichenliste

- 10: Türkommunikationssystem
- 20: Mehrzahl Netzwerkknoten
- 30: Knoten
- 31: Inbetriebnahmeknoten
- 32: erster Knoten
- 33: zweiter Knoten
- 34: Netzwerkverbindungsknoten
- 35: Außenstellenknoten
- 36: Innenstellenknoten
- 40: Netzwerk
- 41: erstes Netzwerk
- 42: zweites Netzwerk
- 43: weiteres Netzwerk
- 50: externes Gerät

## Patentansprüche

1. Verfahren zur Konfiguration eines Türkommunikationssystems (10) gemäß einer Projektierung des Türkommunikationssystems (10), wobei das Türkommunikationssystem (10) eine Mehrzahl Netzwerkknoten (20) aufweist, wobei das Verfahren umfasst:
- Auswählen eines Inbetriebnahmeknotens (31), wobei ein erster Knoten (32) der Mehrzahl Netzwerkknoten (20) als Inbetriebnahmeknoten (31) ausgewählt wird;
- Übermitteln der Projektierung an den Inbetriebnahmeknoten (31), wobei bevorzugt die Projektierung von einem externen Gerät (50) übermittelt wird;
- Übermitteln der Projektierung und/oder Konfigurationsparameter der Projektierung ausgehend von dem Inbetriebnahmeknoten (31) an die übrigen Knoten (30) der Mehrzahl Netzwerkknoten (20), und Konfigurieren der Knoten (30) mit einer der Projektierung entsprechenden Konfiguration.

2. Verfahren nach Anspruch 1, bei dem das Türkommunikationssystem (10) ein erstes Netzwerk (41) und ein zweites Netzwerk (42) umfasst, die über mindestens einen Netzwerkverbindungsknoten (34) miteinander verbunden sind, wobei beim Übermitteln der Projektierung an die übrigen Knoten (30) die Projektierung von dem ersten Netzwerk (41) an das zweite Netzwerk (42) über den Nerzwerkverbindungsknoten (34) übermittelt wird, und/oder von dem zweiten Netzwerk (42) an das erste Netzwerk (41) über den Nerzwerkverbindungsknoten (34) übermittelt wird.

3. Verfahren nach Anspruch 2, bei dem
- mindestens ein Knoten (30) des ersten Netzwerks (41) ein Außenstellenknoten (35) ist und/oder aufweist, wobei bei dem Auswählen des Inbetriebnahmeknotens (31) der oder ein Außenstellenknoten (35) des ersten Netzwerks (41) ausgewählt wird, und/oder
- bei dem das erste Netzwerk (41) ein Außenstellennetzwerk und/oder das zweite Netzwerk (42) ein Innenstellennetzwerk ist und/oder aufweist, oder bei dem das erste Netzwerk (41) ein Innenstellennetzwerk und/oder das zweite Netzwerk (42) ein Außenstellennetzwerk ist und/oder aufweist, wobei beim Auswählen des Inbetriebnahmeknotens (31) ein Knoten (30) des ersten Netzwerks (41) als Inbetriebnahmeknoten (31) ausgewählt wird.

4. Verfahren nach einem der vorangegangenen Ansprüche, bei dem nach dem Konfigurieren der Knoten (30) das Verfahren nochmals durchgeführt wird, wobei bei dem Auswählen des Inbetriebnahmeknotens (31) ein zweiter Knoten (33) der Mehrzahl Netzwerkknoten (20) anstelle des ersten Knotens (32) als Inbetriebnahmeknoten (31) ausgewählt wird, wobei bevorzugt der zweite Knoten (33) von dem ersten Knoten (32) verschieden ist.

5. Verfahren nach einem der vorangegangenen Ansprüche, bei dem die Projektierung computergestützt erstellt ist und/oder wird, bevorzugt mit einem Konfigurator.

6. Verfahren nach einem der vorangegangenen Ansprüche, bei dem beim Übertragen der Projektierung und/oder der Konfigurationsparameter
- die Projektierung und/oder Konfigurationsparameter zwischen mindestens zwei, mehreren oder allen jeweils unmittelbar miteinander verbundenen Knoten (30) übertragen wird, und/oder sukzessive mindestens zwei, mehrere oder jeder der Knoten (30) konfiguriert wird, und/oder
- wobei der Inbetriebnahmeknoten (31) die Projektierung und/oder die Konfigurationsparameter unmittelbar an mindestens einen, mehrere oder jeden der übrigen Knoten (30) der Mehrzahl Netzwerkknoten (20) überträgt.

7. Verfahren nach einem der vorangegangenen Ansprüche, bei dem, wenn sich eine IP-Adresse mindestens eines Knotens (30) ändert, die Knoten (30) nochmals entsprechend der Projektierung konfiguriert werden.

8. Verfahren nach einem der vorangegangenen Ansprüche, bei dem mindestens ein in der Projektierung vorgesehener Knoten (30) nach dem Konfigurieren dem Türkommunikationssystem (10) hinzugefügt wird, die Projektierung und/oder die Konfigurationsparameter an den neu hinzugefügten Knoten übertragen wird, bevorzugt von dem Inbetriebnahmeknoten (31) und/oder einem mit dem hinzugefügten Knoten (30) unmittelbar verbundenen Knoten (30), und der hinzugefügte Knoten (30) entsprechend der Projektierung konfiguriert wird.

9. Verfahren nach einem der vorhergehenden Ansprüche, bei dem nach dem Konfigurieren mindestens zwei Knoten (30) miteinander Daten austauschen und/oder kommunizieren.

10. Verfahren nach einem der vorangegangenen Ansprüche, bei dem der Inbetriebnahmeknoten (31) eines oder mehrere Zertifikate erstellt, bevorzugt nach dem Konfigurieren der Knoten (30), um nach dem Konfigurieren eine verschlüsselte Kommunikation und/oder einen verschlüsselten Datenaustauch zwischen den Knoten (30) zu ermöglichen.

11. Verfahren nach einem der vorangegangenen Ansprüche, bei dem Änderungen der Projektion und/oder der Konfigurationsparameter mindestens eines, mehrerer oder aller Knoten (30) auf mindestens einem oder mehreren anderen Knoten (30) hinterlegt werden.

12. Türkommunikationssystem (10) umfassend eine Mehrzahl Netzwerkknoten (20), das nach einem der vorangegangenen Ansprüche konfiguriert ist.

13. Türkommunikationssystem (10) nach Anspruch 12, bei dem die Knoten (30) der Mehrzahl Netzwerkknoten (20) dazu eingerichtet sind, miteinander zu kommunizieren und/oder Daten auszutauschen, bevorzugt verschlüsselt miteinander zu kommunizieren und/oder verschlüsselt Daten auszutauschen.

14. Türkommunikationssystem (10) nach einem der vorangegangenen Ansprüche 12 oder 13, das ein erstes Netzwerk (41), ein zweites Netzwerk (42) und mindestens einen Netzwerkverbindungsknoten (34) aufweist, wobei das erste Netzwerk (41) mit dem zweiten Netzwerk (42) über den mindestens einen Netzwerkverbindungsknoten (34) verbunden ist.

15. Türkommunikationssystem (10) nach Anspruch 14, bei dem
- das erste Netzwerk (41) mindestens einen Außenstellenknoten (35) aufweist, und/oder das zweite Netzwerk (42) mindestens einen Innenstellenknoten (36) aufweist, und/oder
- bei dem das erste Netzwerk (41) ein Außenstellennetzwerk und/oder das zweite Netzwerk (42) ein Innenstellennetzwerk ist und/oder aufweist, oder wobei das erste Netzwerk (41) ein Innstellennetzwerk und/oder das zweite Netzwerk (42) ein Außenstellennetzwerk ist und/oder aufweist.

## Geänderte Patentansprüche

### Geänderte Patentansprüche gemäss Regel 137(2) EPÜ.

1. Verfahren zur Konfiguration eines Türkommunikationssystems (10) gemäß einer Projektierung des Türkommunikationssystems (10), wobei das Türkommunikationssystem (10) eine Mehrzahl Netzwerkknoten (20) aufweist, wobei das Verfahren umfasst:
- Auswählen eines Inbetriebnahmeknotens (31), wobei ein erster Knoten (32) der Mehrzahl Netzwerkknoten (20) als Inbetriebnahmeknoten (31) ausgewählt wird;
- Übermitteln der Projektierung an den Inbetriebnahmeknoten (31), wobei bevorzugt die Projektierung von einem externen Gerät (50) übermittelt wird;
- Übermitteln der Projektierung und/oder Konfigurationsparameter der Projektierung ausgehend von dem Inbetriebnahmeknoten (31) an die übrigen Knoten (30) der Mehrzahl Netzwerkknoten (20), und Konfigurieren der Knoten (30) mit einer der Projektierung entsprechenden Konfiguration, wobei eine Erstellung der Projektierung unabhängig von dem Türkommunikationssystem (10) und/oder vor der Konfiguration des Türkommunikationssystems (10) erfolgt, indem bei der Erstellung der Projektierung keine physikalischen Knoten (30, 31, 32, 33, 34, 35, 36) benötigt werden, so dass die physikalischen Knoten (20, 31, 32, 33, 34, 35, 36) erst bei der Konfiguration des Türkommunikationssystems (10) erforderlich sind.

2. Verfahren nach Anspruch 1, bei dem das Türkommunikationssystem (10) ein erstes Netzwerk (41) und ein zweites Netzwerk (42) umfasst, die über mindestens einen Netzwerkverbindungsknoten (34) miteinander verbunden sind, wobei beim Übermitteln der Projektierung an die übrigen Knoten (30) die Projektierung von dem ersten Netzwerk (41) an das zweite Netzwerk (42) über den Nerzwerkverbindungsknoten (34) übermittelt wird, und/oder von dem zweiten Netzwerk (42) an das erste Netzwerk (41) über den Nerzwerkverbindungsknoten (34) übermittelt wird.

3. Verfahren nach Anspruch 2, bei dem
- mindestens ein Knoten (30) des ersten Netzwerks (41) ein Außenstellenknoten (35) ist und/oder aufweist, wobei bei dem Auswählen des Inbetriebnahmeknotens (31) der oder ein Außenstellenknoten (35) des ersten Netzwerks (41) ausgewählt wird, und/oder
- bei dem das erste Netzwerk (41) ein Außenstellennetzwerk und/oder das zweite Netzwerk (42) ein Innenstellennetzwerk ist und/oder aufweist, oder bei dem das erste Netzwerk (41) ein Innenstellennetzwerk und/oder das zweite Netzwerk (42) ein Außenstellennetzwerk ist und/oder aufweist, wobei beim Auswählen des Inbetriebnahmeknotens (31) ein Knoten (30) des ersten Netzwerks (41) als Inbetriebnahmeknoten (31) ausgewählt wird.

4. Verfahren nach einem der vorangegangenen Ansprüche, bei dem nach dem Konfigurieren der Knoten (30) das Verfahren nochmals durchgeführt wird, wobei bei dem Auswählen des Inbetriebnahmeknotens (31) ein zweiter Knoten (33) der Mehrzahl Netzwerkknoten (20) anstelle des ersten Knotens (32) als Inbetriebnahmeknoten (31) ausgewählt wird, wobei bevorzugt der zweite Knoten (33) von dem ersten Knoten (32) verschieden ist.

5. Verfahren nach einem der vorangegangenen Ansprüche, bei dem die Projektierung computergestützt erstellt ist und/oder wird, bevorzugt mit einem Konfigurator.

6. Verfahren nach einem der vorangegangenen Ansprüche, bei dem beim Übertragen der Projektierung und/oder der Konfigurationsparameter
- die Projektierung und/oder Konfigurationsparameter zwischen mindestens zwei, mehreren oder allen jeweils unmittelbar miteinander verbundenen Knoten (30) übertragen wird, und/oder sukzessive mindestens zwei, mehrere oder jeder der Knoten (30) konfiguriert wird, und/oder
- wobei der Inbetriebnahmeknoten (31) die Projektierung und/oder die Konfigurationsparameter unmittelbar an mindestens einen, mehrere oder jeden der übrigen Knoten (30) der Mehrzahl Netzwerkknoten (20) überträgt.

7. Verfahren nach einem der vorangegangenen Ansprüche, bei dem, wenn sich eine IP-Adresse mindestens eines Knotens (30) ändert, die Knoten (30) nochmals entsprechend der Projektierung konfiguriert werden.

8. Verfahren nach einem der vorangegangenen Ansprüche, bei dem mindestens ein in der Projektierung vorgesehener Knoten (30) nach dem Konfigurieren dem Türkommunikationssystem (10) hinzugefügt wird, die Projektierung und/oder die Konfigurationsparameter an den neu hinzugefügten Knoten übertragen wird, bevorzugt von dem Inbetriebnahmeknoten (31) und/oder einem mit dem hinzugefügten Knoten (30) unmittelbar verbundenen Knoten (30), und der hinzugefügte Knoten (30) entsprechend der Projektierung konfiguriert wird.

9. Verfahren nach einem der vorhergehenden Ansprüche, bei dem nach dem Konfigurieren mindestens zwei Knoten (30) miteinander Daten austauschen und/oder kommunizieren.

10. Verfahren nach einem der vorangegangenen Ansprüche, bei dem der Inbetriebnahmeknoten (31) eines oder mehrere Zertifikate erstellt, bevorzugt nach dem Konfigurieren der Knoten (30), um nach dem Konfigurieren eine verschlüsselte Kommunikation und/oder einen verschlüsselten Datenaustauch zwischen den Knoten (30) zu ermöglichen.

11. Verfahren nach einem der vorangegangenen Ansprüche, bei dem Änderungen der Projektion und/oder der Konfigurationsparameter mindestens eines, mehrerer oder aller Knoten (30) auf mindestens einem oder mehreren anderen Knoten (30) hinterlegt werden.

12. Türkommunikationssystem (10) umfassend eine Mehrzahl Netzwerkknoten (20) aus physikalischen Knoten (30, 31, 32, 33, 34, 35, 36), das mittels einer unabhängig von dem Türkommunikationssystem (10) und/oder vor der Konfiguration des Türkommunikationssystems (10) erstellten Projektierung nach einem der vorangegangenen Ansprüche konfiguriert ist.

13. Türkommunikationssystem (10) nach Anspruch 12, bei dem die Knoten (30) der Mehrzahl Netzwerkknoten (20) dazu eingerichtet sind, miteinander zu kommunizieren und/oder Daten auszutauschen, bevorzugt verschlüsselt miteinander zu kommunizieren und/oder verschlüsselt Daten auszutauschen.

14. Türkommunikationssystem (10) nach einem der vorangegangenen Ansprüche 12 oder 13, das ein erstes Netzwerk (41), ein zweites Netzwerk (42) und mindestens einen Netzwerkverbindungsknoten (34) aufweist, wobei das erste Netzwerk (41) mit dem zweiten Netzwerk (42) über den mindestens einen Netzwerkverbindungsknoten (34) verbunden ist.

15. Türkommunikationssystem (10) nach Anspruch 14, bei dem
- das erste Netzwerk (41) mindestens einen Außenstellenknoten (35) aufweist, und/oder das zweite Netzwerk (42) mindestens einen Innenstellenknoten (36) aufweist, und/oder
- bei dem das erste Netzwerk (41) ein Außenstellennetzwerk und/oder das zweite Netzwerk (42) ein Innenstellennetzwerk ist und/oder aufweist, oder wobei das erste Netzwerk (41) ein Innstellennetzwerk und/oder das zweite Netzwerk (42) ein Außenstellennetzwerk ist und/oder aufweist.
